# EUROPEAN PATENT SPECIFICATION

(11) **EP 3 476 588 B1**
(45) Date of publication and mention of the grant of the patent: **24.11.2021**
(21) Application number: 17397525.1
(22) Date of filing: 27.10.2017
(51) Int. Cl.: B32B 5/02, B32B 5/18, B32B 7/12, B32B 15/082, B32B 15/088, B32B 15/09, B32B 15/12, B32B 15/14, B32B 15/20, B32B 27/06, B32B 27/30, B32B 27/34, B32B 27/36, B32B 29/00

(54) **A COVERING FOR AN ISOCYANATE-BASED PANEL**
EIN ABDECKUNG FÜR EIN ISOCYANAT-BASIERTES PANEL
COUVERTURE POUR PANNEAU À BASE D'ISOCYANATE

(43) Date of publication of application: 01.05.2019
(73) Proprietor: Walki Group Oy, 02170 Espoo (FI)
(72) Inventor: RINKINEN, Juuso, 37600 VALKEAKOSKI (FI); KORPELA, Heikki, 37600 VALKEAKOSKI (FI)
(74) Representative: Berggren Oy

(56) References cited:
- EP-A1- 2 404 750
- EP-A1- 3 106 580
- US-A1- 2004 014 382

## Description

### Technical field

The invention relates to coverings suitable for polyurethane insulation panels. The invention relates to polyurethane insulation panels.

### Background

Polyurethane panels are commonly used in building to thermally insulate e.g. interior from exterior. Such panels are known e.g. from European patent application documents EP2333180 and EP2404750. Such a panel comprises a core made of polyurethane and a covering. As indicated in EP2333180 a gas impermeable layer is commonly used in a covering of a polyurethane panel to prevent air and/or other gases from leaking from the polyurethane core. This helps the polyurethane core to keep the thermally insulating properties for a long time, since no gas leaks away from the core, and also improves structural rigidity, since the gas tight layer is also liquid proof, in this preventing moistening of the urethane core. As indicated in EP2404750, an aluminium layer is commonly used as the gas impermeable layer. The aluminium layer is commonly attached to the polyurethane core with suitable adhesive or polymer. For example, EP2404750 discloses a layer of PE, PP, or PET for this purpose.

It has been assumed that the gases expelled from the polyurethane core comprise gas that is good thermal insulator and does not react with the materials of the polyurethane panel. As an example, a core of a polyurethane panel may comprise pentane. However, it has now been noticed, that also some other chemicals, used in the manufacture of the polyurethane core, tend to come out of the polyurethane core. The chemicals may come out by migration and/or by diffusion. Often the process is called chemical migration, which, however, is often a diffusion controlled process. The term migration will be used herein for the process irrespective of the precise physics or chemistry behind migration. It has also been noticed that some grades of polyurethane panels have been made of such a polyurethane composition that the chemicals that migrate out of the core cause delamination of the aluminium layer from the adhesive. Most likely the chemicals migrate through the layers in between the urethane core and the aluminium layer and deteriorate the properties of the material used to adhere the aluminium to the core. When the aluminium delaminates or detaches from the core it no longer forms a gas impermeable layer, which deteriorates the properties of the polyurethane panel.

### Summary

As a solution to the aforementioned problem, it has been found that a barrier part can be applied in order to prevent the migration of the aforementioned chemicals up to the metal layer comprising aluminium. In use, such a barrier part is arranged in between a core of a polyurethane panel and the metal layer of the covering of the polyurethane panel. An embodiment of the invention is the covering *per se,* since typically different entities manufacture the panel with the covering and the covering as such. In such a case, the barrier part is arranged to be left, in use, in between a core of a polyurethane panel and a metal layer of the covering.

The barrier part comprises a suitably thick or massive polymer layer comprising at least one of: ethylene vinyl alcohol (EVOH), polyamide, poly vinyl alcohol (PVA), and polybutylene terephthalate (PBT). In addition a support layer is used to support the metal layer. The invention is more specifically disclosed in the independent claim 1. The dependent claims disclose preferable embodiments. The description discloses also further embodiments.

### Brief description of the drawings

- Fig. 1a: shows, as a side view, a polyurethane panel having a core and a covering,
- Fig. 1b: shows, as a perspective view, a polyurethane panel having a core in between two coverings,
- Fig. 1c: shows, as a side view, a structure of a covering for a polyurethane panel, the covering consisting of a barrier part and a support part,
- Fig. 1d: shows, as a side view, a structure of a covering for a polyurethane panel, the covering comprising a barrier part, a support part, and a face part,
- Fig. 1e: shows, as a side view, a structure of a polyurethane panel with two coverings,
- Figs. 2a-2e: show, as a side view, barrier parts of a covering,
- Figs. 3a-3b: show, as a side view, support parts of a covering,
- Figs. 4a-4e: show, as a side view, face parts of a covering,
- Fig. 5: shows, as a side view, parts of a covering,
- Fig. 6a: shows, as a side view, a structure of a polyurethane panel having a covering, and
- Fig. 6b: shows, as a side view, a structure of a polyurethane panel having a covering.

### Detailed description

In this description, the term polyurethane refers both to polymer composed of organic units joined by carbamate (urethane) links (commonly denoted by the acronym PUR or PU) and to polyisocyanurate (PIR). Both PUR and PIR are manufactured from two components: an isocyanate and a polyol. Thus, polyurethanes, both PUR and PIR, are examples of isocyanate-based polymers. The properties of polyurethane are influenced by the type the isocyanates used to make it. Polyurethanes in general are used in many applications, including rigid foam insulation panels. This invention relates to such panels and/or their coverings. The term isocyanate-based insulation panels refers to such a panel. Such a panel is commonly called a polyurethane panel, in the sense that also polyisocyanurate is often classified as a type of polyurethane.

The properties of polyurethane (i.e. isocyanate-based polymer) depend on many things. The polyurethane may comprise e.g. a blowing agent and one or more additives selected from a group of a catalyst, a nucleating agent, a surfactant, a crosslinker, a chain extender, a flame retardant, a filler, a colorant, a pigment, an antistatic agent, reinforcing fibers, an antioxidant, a preservative, an infrared blocking agent, and an acid scavenger. Such additives are used to improve e.g. thermal resistance, fire resistance, acoustic properties, rigidity, and/or moisture resistance of rigid foam insulation panels.

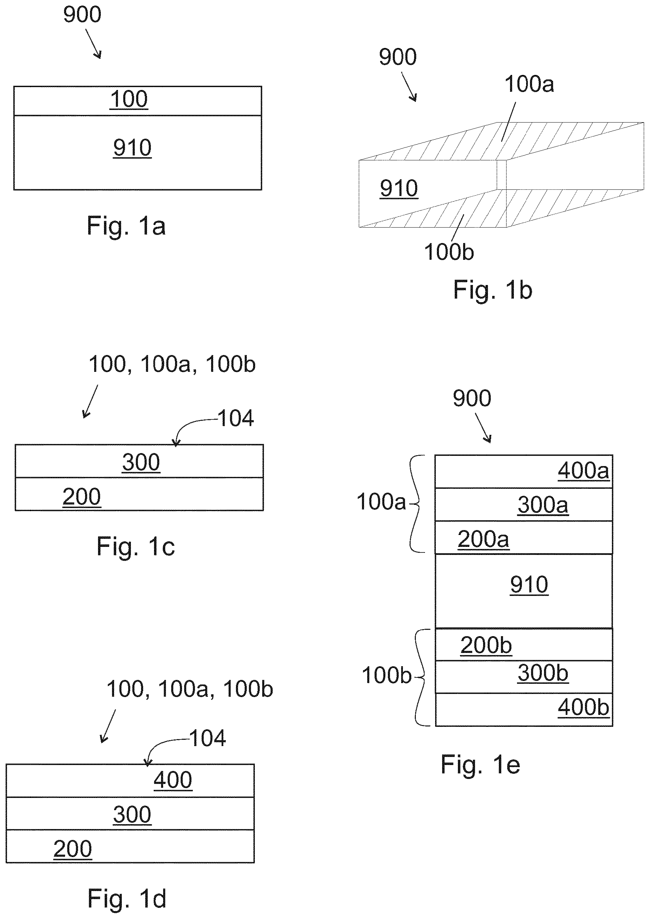

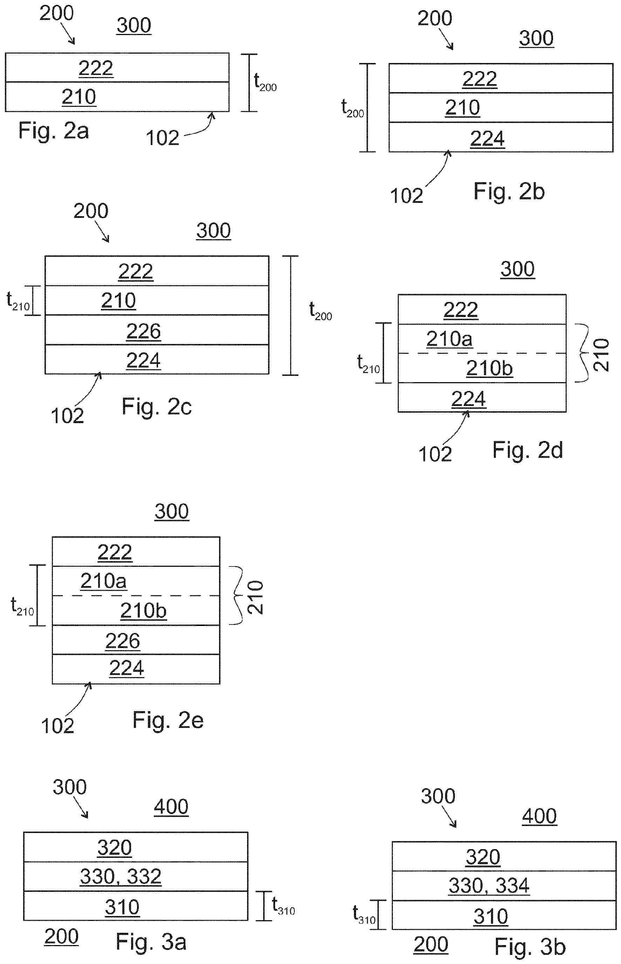

Referring to Fig. 1a, a polyurethane panel 900 (i.e. an isocyanate-based panel 900), typically comprises a core 910 and a first covering 100. Referring to Fig. 1b, more typically a polyurethane panel 900 comprises a core 910, a first covering 100a, and a second covering 100b, such that the core 910 is arranged in between the first covering 100a and a second covering 100b. The core 910 of the panel 900 comprises isocyanate-based polymer (i.e. polyurethane, such as PUR or PIR) in rigid foam form. Referring to Figs. 1c and 1d, the covering 100 or the coverings 100a, 100b comprise a support part 300 comprising a first metal layer 310 in order to prevent gases from being expelled from the core. As indicated in background, typically the first metal layer 310 comprises aluminium. Aluminium is beneficial for its low gas diffusivity and light weight. The polyurethane panel 900 is often manufactured such that the uncured compounds of polyurethane are applied onto the first covering 100a, and the polyurethane is allowed crosslink to form the core 910. Thus, a first surface 102 (cf. Figs. 2a to 2e) of the covering 100a should comprise such a material, to which polyurethane adheres well.

As indicated in the background, it has been found that some of the chemicals used in the manufacture of the polyurethane core tend to migrate out of the polyurethane core. If the migration up to the metal layer 310 is not prevented, the chemicals that migrate out of the core 910 may cause delamination of the metal layer 310 from the adhesive used to bond the metal layer 310.

Referring to Figs. 1c and 1d, in order to prevent the migration of the chemicals, the covering 100 comprises a barrier part 200. Referring to Fig. 2a, the barrier part 200 comprises a barrier layer 210. The barrier layer may be attached to the first metal layer 310 with a first adhesion layer 222. The barrier part 200, in particular the barrier layer 210 thereof, is configured to reduce migration of chemicals from the core 910 through the barrier layer 210 to the support part 300. As indicated in Fig. 1d, the covering 100 may comprise a face part 400, of which properties and functions will be described later. The covering 100 comprises a second surface 104, which is formed by the support part 300 (see Fig. 1c) or the face part 400 (see Fig. 1d). When applied onto a core 910, the second surface 104 of the covering forms a surface of the panel 900. The second surface 104 of the covering 100 has a normal that is parallel to the thickness of the covering 100. Moreover, at least a part of the first metal layer 310 is left in between the second surface 104 and the barrier part 200 (i.e. in particular the barrier layer 210 of the barrier part). As indicated in Fig. 1e, when used as a covering of a panel 900, the barrier part (200a, 200b) is arranged in between the support part (200a, 300b) and the polyurethane core 910.

As for suitable barrier materials, polymers are beneficial, since they can be easily manufactured. However, it has been found that only some polymers have excellent capability in preventing the chemical migration. Thus, even a reasonably thin and/or light barrier layer 210 of one of those polymers suffice. However, the barrier layer 210 should not be too thin or light in order to prevent migration. It has been found that the following polymers function well in this respect: ethylene vinyl alcohol (EVOH), polyamide (e.g. Nylon), poly (vinyl alcohol) (PVA), and polybutylene terephthalate (PBT). In particular any polyamide of the types polyamide-6, polyamide-12, and polyamide-66 have been found to function well. Moreover, as for poly (vinyl alcohol), in particular amorphous poly (vinyl alcohol) has been found to function well. Poly (vinyl alcohol) is commonly also referred to as poly vinyl alcohol (PVA).

For these reasons, in an embodiment, the barrier layer 210 comprises at least one of: ethylene vinyl alcohol (EVOH), polyamide, poly vinyl alcohol (PVA), and polybutylene terephthalate (PBT). Moreover, the barrier layer 210 has a specific mass of at least 2 g/m². Throughout this description, the term specific mass refers to the mass of a material layer as divided by the area of the layer. In addition, the barrier layer may have a total thickness t₂₁₀ of at least 2 µm.

In particular, in an embodiment, the barrier layer comprises at least one of: ethylene vinyl alcohol (EVOH), polyamide, poly vinyl alcohol (PVA), and polybutylene terephthalate (PBT) such that a total specific mass of these compounds is at least 2 g/m². For example, the barrier layer 210 may be formed of two sub-layers 210a and 210b, as indicated in Fig. 2d, each one of the sub-layers 210a, 210b consisting of one of ethylene vinyl alcohol (EVOH), polyamide, poly vinyl alcohol (PVA), and polybutylene terephthalate (PBT). In such a case, the sum of the total specific mass of these two bub-layers is at least 2 g/m². The sum of the thicknesses of these bub-layers may be at least 2 µm.

Naturally, the barrier layer 210 may comprise other materials, too. In the alternative, the barrier layer 210 may consist of at least one of: ethylene vinyl alcohol (EVOH), polyamide, poly vinyl alcohol (PVA), and polybutylene terephthalate (PBT), and have the aforementioned specific mass. As an example, the barrier layer 210 may consist of one of: ethylene vinyl alcohol (EVOH), polyamide, poly vinyl alcohol (PVA), and polybutylene terephthalate (PBT), and have the aforementioned thickness and/or specific mass. In any case, the barrier part 200 may comprise also other layers than the barrier layer 210.

In an embodiment, the barrier layer 210 comprises at least one of polyamide and ethylene vinyl alcohol. In an embodiment, the barrier layer 210 comprises both polyamide and ethylene vinyl alcohol. In an embodiment, the barrier layer 210 consists of polyamide. In an embodiment, the barrier layer 210 consists of ethylene vinyl alcohol. In an embodiment, the barrier layer 210 consists of a first sub-layer 210a of ethylene vinyl alcohol and a second sub-layer 210b of polyamide.

Referring to Figs. 3a and 3b, in addition to the first metal layer 310, the support part 300 comprises a support layer 320. The main purpose of the support layer 320 is to support the first metal layer 310, in particular from external stress. The support layer 320 comprises fibrous material. Fibrous materials in general provide for excellent mechanical strength without being heavy. In order to support the metal layer 310, the support layer 320 is attached to the first metal layer 310 with an attachment layer 330.

Referring to Figs. 3a and 3b, the attachment layer 330 may comprise polymer material 332. The attachment layer 330 may comprise at least 8 g/m² of polymer material 332. Preferably, the attachment layer 330 comprises extrudable polymer material 332. As for manufacturing, the attachment layer 330 may be extruded onto the first metal layer 310 or the support layer 320. In an embodiment, the attachment layer 330 is made of polymer and the specific mass of the attachment layer 330 is from 8 g/m² to 30 g/m². In an embodiment, the attachment layer 330 is made of polymer and the specific mass of the attachment layer 330 is from 10 g/m² to 20 g/m².

The attachment layer 330 may comprise adhesive 334. The attachment layer 330 may comprise at least 1 g/m² of adhesive 334. In an embodiment, the attachment layer 330 comprises from 1 g/m² to 5 g/m² of adhesive 334. In an embodiment, the attachment layer 330 comprises from 1.5 g/m² to 2 g/m² of adhesive 334. In the covering 100, the adhesive 334 of the attachment layer 330 is in hardened form, such as in dried form or cooled form (in case the adhesive is a non-reactive adhesive) or cured form (in case the adhesive is a reactive adhesive).

As indicated above, the main purpose of the support layer 320 is to support the metal layer 310 from external stress (i.e. exterior of the panel 900) and the main purpose of the barrier layer 210 is to prevent chemical migration from the core 910 of the panel 900. Therefore, the support layer 320 and the barrier layer 210 are arranged on different sides of the metal layer 310. Thus, in an embodiment, the first metal layer 310 is left in between the support layer 320 and the barrier part 200. The main purpose of the first metal layer 310 is to prevent diffusion of gas from the core 910.

The covering 100 may be sold as such. However, such a covering is designed for use as a covering 100 of a panel 900 comprising also a core 910. In such a use, the barrier part 200 of the covering 100 is left in between the core 910 and the support part 300 of the covering 100. Typically, the barrier part 200 of the covering 100 is left in between the core 910 and the first metal layer 310 of the covering 100. Referring to Figs. 1e, 2a, and 3a, when the panel 900 comprises a first covering 100a on a first side of the core 910 and a second covering 100b on a second, opposite, side of the core 910, the barrier part 200a of the first covering 100a is left in between the core 910 and the support part 300a of the first covering 100a and the barrier part 200b of the second covering 100b is left in between the core 910 and the support part 300b of the second covering 100b. In an embodiment, the barrier part 200a of the first covering 100a is left in between the core 910 and the first metal layer 310 the first covering 100a and the barrier part 200b of the second covering 100b is left in between the core 910 and the first metal layer 310 of the second covering 100b

Preferably, the first metal layer 310 is made of aluminium and has a thickness t₃₁₀ of at least 6 µm, such as from 6 µm to 50 µm, preferably from 6 µm to 12 µm. The lower limit is sufficient for preventing gases from expelling out of the core 910. The upper limit is ensures that the specific mass of the covering 100 remains sufficiently low. This is beneficial for the point of view of handling the covering 100 or the panel 900, and also from the point of view of costs involved.

As for the support layer 320, in an embodiment, the support layer comprises paper. In an embodiment, the support layer 320 comprises paper having a specific mass of from 30 g/m² to 200 g/m², preferably from 40 g/m² to 150 g/m². In an embodiment, the support layer 320 consists of paper having a specific mass of from 30 g/m² to 200 g/m², preferably from 40 g/m² to 150 g/m². The paper of the support layer may be Kraft paper. The paper of the support layer may be bleached or unbleached. The aforementioned specific mass in connection with paper has been found to provide for sufficient mechanical support without too much weight increase. As for the quality of the paper, Kraft paper is known to have high elasticity and high tear resistance, and it is thus particularly suitable, because strength and durability is required from the support layer.

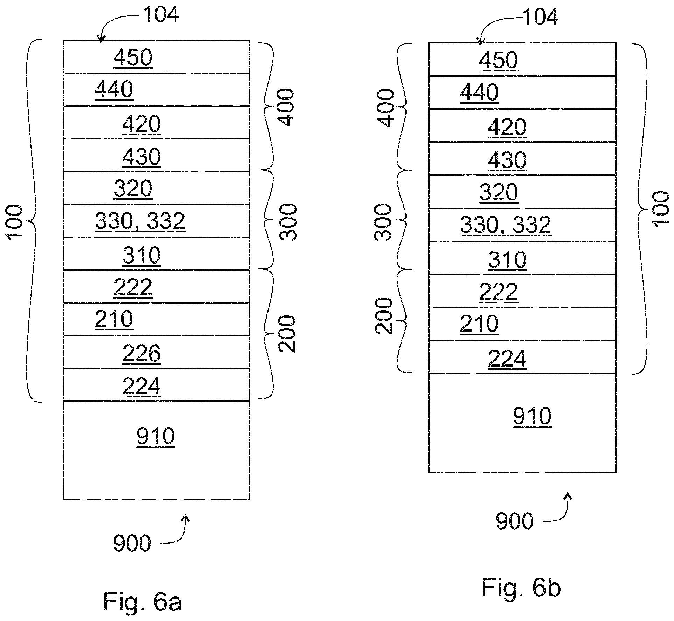

Figures 2a to 2e show embodiments of the barrier part 200. The position of the support part 300, relative to the barrier part 200 is shown by the underlined reference sign 300. Referring to Fig. 2a, in an embodiment, the barrier part 200 comprises, in addition to the barrier layer 210, a first adhesion layer 222. A purpose of the first adhesion layer 222 is to adhere the barrier layer 210 to the support part 300; in particular to the first metal layer 310 thereof, as indicated in Figs. 6a and 6b. Therefore, the first adhesion layer 222 is left in between the barrier layer 210 and the first metal layer 310. In an embodiment, the first adhesion layer 222 forms an interface with the first metal layer 310. In such a case, no other layer is left in between the first adhesion layer and the first metal layer 310.

Referring to Fig. 2b, in an embodiment, the barrier part 200 comprises, in addition to the barrier layer 210, a first adhesion layer 222 and a second adhesion layer 224. A purpose of the second adhesion layer 224 is to adhere the barrier layer 210 to the core 910 of the panel 900, in particular on the side of the barrier layer 210, as indicated in Figs. 6a and 6b. Thus, the barrier layer 210 is left in between the first adhesion layer 222 and the second adhesion layer 224, as indicated in Figs. 2b and 2c.

Preferably, when the covering 100 is separate from the core 910, i.e. the covering 100 has not been attached to the core 910, the second adhesion layer 224 forms the first surface 102 of the covering 100. The first surface 102 of the covering 100 has a normal that is parallel to the thickness of the covering 100. Moreover, at least a part of the barrier layer 210 is left in between the first surface 102 and the support part 300 (i.e. in particular the first metal layer 310 of the support part). A third adhesion layer 226 may be used to adhere the second adhesion layer 224 to the barrier layer 210. Thus, the third adhesion layer 226 may be left in between the barrier layer 210 and the second adhesion layer 224.

In an embodiment, the first adhesion layer 222 is made of polymer. In an embodiment, the second adhesion layer 224 is made of polymer. In an embodiment, the first adhesion layer 222 and the second adhesion layer 224 are made of the same material. This simplifies the manufacturing process. In an embodiment, the third adhesion layer 226 is made of polymer.

The barrier part 200 may be formed as a laminate that is attached to the substrate part 300. The barrier part 200 may be attached to the first metal layer 310 of the substrate part 300, as indicated in Figs. 6a and 6b. However, the first metal layer 310 of the substrate part could be coated with some interface material, whereby the barrier part 200 would be attached to the interface material (not shown). Alternatively, the barrier part 200 may be extruded or coextruded directly onto the first metal layer 310, or if coated with some interface material, onto the interface material. When manufacturing the covering 100, the materials are selected such that they are compatible with the manufacturing process.

As indicated in the examples (see section "examples"), in an embodiment, wherein the barrier part 200 may be formed as a laminate that is attached to the substrate part 300, the first adhesion layer 222 comprises polyethylene. Preferably, the barrier part 200 comprises also the second adhesion layer to help bonding between the core 910. In such a case, also the second adhesion layer 224 comprises polyethylene. The materials for the barrier layer 210 have been discussed above. Preferably, the barrier layer 210 comprises polyamide. In an embodiment, the barrier layer 210 comprises polyamide and ethylene vinyl alcohol (EVOH). The covering 100 may be free from a third adhesion layer 226. As an alternative to polyethylene, polypropylene and/or their blend can be used in the second adhesion layer 224.

As indicated in the examples (see section "examples"), in an embodiment, wherein the barrier part 200 is extruded or coextruded directly onto the first metal layer 310, the first adhesion layer 222 comprises at least one of a terpolymer, an ionomer, and ethylene acrylic acid (EAA). Preferably, the barrier part 200 comprises also a second adhesion layer 224 to help bonding to the core 910 of a polyurethane panel 900. In an embodiment, the second adhesion layer 224 comprises at least one of: low density polyethylene (LDPE), high density polyethylene (HDPE), linear low density polyethylene (LLDPE), metallocene polyethylene, a blend of polyethylene and a terpolymer, a blend of polyethylene and a copolymer, and polypropylene (PP). In an embodiment, a specific mass of the second adhesion layer 224 is at least 5 g/m². Preferably, the barrier part 200 comprises also the third adhesion 226 layer to help bonding of the barrier layer 210 to the second adhesion layer 224. In such a case, also the third adhesion layer 226 comprises at least one of a terpolymer, an ionomer, and ethylene acrylic acid (EAA). Preferably, the barrier layer 210 comprises polyamide.

Thus, in an embodiment, the barrier part 200 comprises a first adhesion layer 222, which is left in between the barrier layer 210 and the first metal layer 310. The first adhesion layer 222 comprises at least one of polyethylene, polypropylene, a terpolymer, an ionomer, and ethylene acrylic acid EAA. In an embodiment, the first adhesion layer 222 has a specific mass of at least 1 g/m². This has been found to be sufficiently thick in view of adhesion. In an embodiment, the first adhesion layer 222 has a specific mass of at most 10 g/m². This helps to keep the mass of the covering 100 and the panel 900 reasonably low. In an embodiment, the specific mass of the first adhesion layer 222 is from 2 g/m² to 5 g/m².

As indicated above, in an embodiment, the barrier part 200 comprises a second adhesion layer 224 such that the barrier layer 210 is left in between the first adhesion layer 222 and the second adhesion layer 224. Moreover, the second adhesion layer 224 comprises at least one of low density polyethylene (LDPE), high density polyethylene (HDPE), linear low density polyethylene (LLDPE), metallocene polyethylene, a blend of polyethylene and a terpolymer, a blend of polyethylene and a copolymer, and polypropylene (PP). In an embodiment, the second adhesion layer 224 has a specific mass of at least 5 g/m². This has been found to be sufficiently thick in view of adhesion. In an embodiment, the second adhesion layer 224 has a specific mass of at most 50 g/m². This helps to keep the mass of the covering 100 and the panel 900 reasonably low. In an embodiment, the specific mass of the second adhesion layer 224 is from 10 g/m² to 30 g/m².

As indicated above, in an embodiment, the barrier part 200 comprises a third adhesion layer 224 in between the barrier layer 210 and the second adhesion layer 224. The third adhesion layer 226 comprises at least one of polyethylene, polypropylene, a terpolymer, an ionomer, and ethylene acrylic acid EAA. In an embodiment, the third adhesion layer 226 has a specific mass of at least 1 g/m². This has been found to be sufficiently thick in view of adhesion. In an embodiment, the third adhesion layer 226 has a specific mass of at most 10 g/m². This helps to keep the mass of the covering 100 and the panel 900 reasonably low. In an embodiment, the specific mass of the third adhesion layer 226 is from 2 g/m² to 5 g/m².

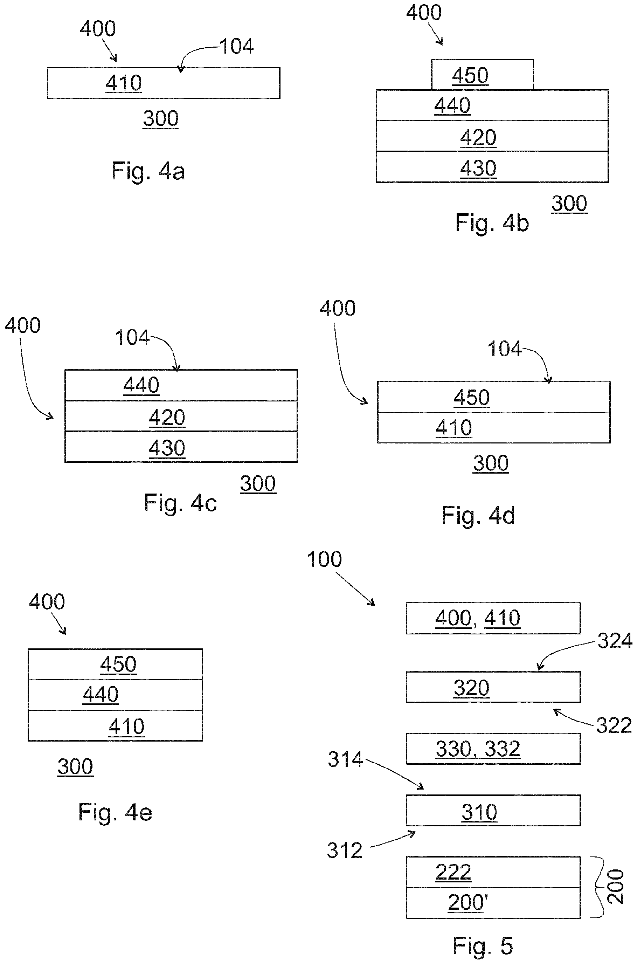

Referring to Figs. 4a to 4e, the covering 100 preferably comprises a face part 400. The relative position of the support part 300 is shown by the underlined reference sign 300 in Figs. 4a to 4e. When the covering 100 comprises the face part 400, the face part 400 forms the aforementioned second surface 104 of the covering (see Figs. 4c, 4d, 6a, and 6b).

A purpose of the face part 400 is to protect the support layer 320 from at least humidity. Correspondingly, the face part 400 is configured to protect the support part 300 from at least humidity. In order to protect the support part 300, the support layer 320 is left in between the face part 400 and the barrier part 200, for example in between the face part 400 and the barrier layer 210. In an embodiment the support layer 320 is left in between the face part 400 and first metal layer 310.

The face part 400 may be used to engineer also other properties of the covering. The face part 400 may be used to engineer the emissivity of the covering 100. The face part 400 may e.g. reflect radiative heat (i.e. electromagnetic radiation at least in the infrared region). Such a face part 400 is typically used in panels 900 for walls and roofs. The face part 400 may e.g. be resistant to certain chemicals, such as alkaline liquids. Such a face part 400 is typically used in panels 900 for floorings.

In order to engineer the emissivity, in an embodiment the face part 400 comprises a second metal layer 420, as indicated in Figs. 4b and 4c. The second metal layer 420 may be made of aluminium. A thickness of the second metal layer 420 may be at least 6 µm.This corresponds to a specific mass of at least 15 g/m². The second metal layer 420 may be attached to the support part 300 with a layer of adhesive 430. In an embodiment, the layer 430 of adhesive forms an interface with the support layer 320. Thus, in an embodiment no other layer is left in between the layer 430 of adhesive and the support layer 320.

In an embodiment, the covering 100 does not comprise a metal layer in between the first metal layer 310 and the barrier layer 210. Thus, when the covering comprises the second metal layer 420, the first metal layer 310 is arranged in between the second metal layer 420 and the barrier layer 210 (see Figs. 6a and 6b). In an embodiment, the covering 100 comprises only a polymer layer or polymer layers in between the first metal layer 310 and the barrier layer 210. Such a polymer layer or layers comprise the first adhesion layer 222. In an embodiment, the covering 100 comprises only the first adhesion layer 222 in between the first metal layer 310 and the barrier layer 210. Such a polymer layer or layers comprise.

In order to provide for protection against chemicals, in an embodiment the face part 400 comprises a protective polymer layer 410, as indicated in Figs. 4a and 4e. A specific mass the protective polymer layer 410 may be e.g. at least 8 g/m². The protective polymer layer 410 may be formed of extrudable polymer. The protective polymer layer 410 may be formed by extrusion.

Thus, in an embodiment, the face part 400 comprises a layer (410, 420) made of metal or polymer. A specific mass of the layer (410, 420) is, in an embodiment, at least 8 g/m². In an embodiment, the layer 430 of adhesive forms an interface with the polymer layer 410 or the second metal layer 420. Thus, in an embodiment no other layer is left in between the layer 430 of adhesive and either one of the layers 410, 420.

When the covering has been applied with a laquer layer 440 and/or printing 450, as detailed below, the layer (410, 420) made of metal or polymer is left in between [a] the lacquer layer 440 and/or printing 450 and [b] the support part 300. If neither laquer layer 440 nor printing 450 has been applied, the layer (410, 420) made of metal or polymer may form the second surface 104 of the covering 100 (Fig. 4a).

The protective polymer layer 410, as well as the second metal layer 420, may be at least partly covered by lacquer 440 and/or printing 450. A lacquer layer 440 may fully cover the protective polymer layer 410 or the second metal layer 420 in order to improve visual appearance and/or to further protect the support part 300. The lacquer of the lacquer layer 440 may be water based or solvent based. The term "solvent" refers to solvents other than water. A printing 450 may at least partly cover the protective polymer layer 410, the second metal layer 420, or the lacquer layer 440 in order to improve visual appearance and/or to provide information related to the covering to a user.

Lacquer 440 and/or printing are illustrated in Figs. 4b-4e. The laquer layer 440 may form the second surface 104 of the covering 100. The printing may form only a part of the second surface 104 of the covering 100.

As for manufacturing the covering 100, the procedure may start by manufacturing the support part 300. However, as indicated above, the barrier part 200, if manufactured separately may, in the alternative, be manufactured first or at the same time.

The support part 300 may be manufactured by
- providing a first metal layer 310 having a primary first side 312 and a primary second side 314 (see Fig. 5),
- providing a support layer 320 comprising fibrous material, the support layer 320 having a secondary first side 322 and a secondary second side 324 (see Fig. 5), and
- attaching the primary second side 314 of the first metal layer 310 to the secondary first side 322 of the support layer 320 by providing an attachment layer 330 in between the primary second side 314 and the secondary first side 322.

The attachment layer 330 may be provided by applying adhesive onto at least one of the primary second side 314 and the secondary first side 322 and arranging the primary second side 314 and the secondary first side 322 in contact with the adhesive. Alternatively, attachment layer 330 may be provided by extruding the attachment layer 330 onto the primary second side 314 or the secondary first side 322, and arranging the secondary first side 322 or the primary second side 314, respectively, contact with the adhesive attachment layer 330. What has been said above about the materials and their amounts regarding the covering applies to the method.

At least a layer of the barrier part 200 of the covering 100 may be thereafter extruded or coextruded onto the primary first side 312 of the first metal layer 310. Other layers of the barrier part 200 of the covering 100 may be thereafter extruded or coextruded onto the thus extruded or coextruded layer, if needed. Alternatively, at least a part of the barrier part 200 may have been extruded or coextruded to form at least a part 200' of the barrier part 200 (see Fig. 5). This part 200' of the barrier part 200 may be then attached to the primary first side 312 of the first metal layer 310 by suitable methods.

As an example, only the part 200' of the barrier part 200 may be attached by using the first adhesion layer 222. After the application, the barrier part 200 comprises both the aforementioned part 200' and the first adhesion layer 222. The first adhesion layer 222 may be e.g. extruded onto the primary first side 312 of the first metal layer 310.

As another example, the whole barrier part 200 may be attached by using some adhesive (not shown) onto the primary first side 312 of the first metal layer 310.

As for the face part 400, if used, a protective polymer layer 410 may be extruded onto the secondary first side 322 of the support layer 320. In the alternative, a protective polymer layer 410 may be attached onto the secondary first side 322 of the support layer 320 using adhesive 430. The second metal layer 420 may be attached onto the secondary first side 322 of the support layer 320 using adhesive 430. Application of laquer 440 and/or printing 450 may be done using methods known by a skilled person.

### Examples of barrier parts

### A. Barrier laminates manufactured separately

The barrier part 200 may be formed as a laminate. Such a laminate may be attached to the support part 300 by known means, e.g. by using adhesive. The laminate comprises the barrier layer 210 arranged in between adhesion layers 222, 224 consisting of polyethylene (see Fig. 2b). Since polyethylene attaches well to polyurethane, a third adhesion layer 226 is not needed. As specific embodiments, the barrier layer 210 may consist of [a] ethylene vinyl alcohol (EVOH), [b] polyamide, or [c] EVOH and polyamide. Referring to Fig. 2d the barrier layer 210 may comprise a first sub-layer 210a and a second sub-layer 210b. The first sub-layer 210a may consist of EVOH or polyamide and the second sub-layer 210b may consist of polyamide or EVOH, respectively. The thickness of the barrier part 200 is preferably from 10 µm to 100 µm.Each one of the polyethylene adhesion layers 222, 224 may have a thickness of from 1 µm to 10 µm; however in such a way that the EVOH and/or polyamide barrier layer 210 in between them has a total thickness of at least 2 µm. The term "total thickness" refers the sum of the sum of the thicknesses of the EVOH and polyamide sub-layers 210a, 210b, if the barrier layer 210 comprises them both. The covering 100 may be free from a third adhesion layer, because already the polyethylene adhesion layer 224 adheres well to the core 910 and the barrier layer 210. Thus, before application onto a core 910, the second adhesion layer 224, which in this embodiment comprises polyethylene, forms the first surface 102 of the covering.

### B. Extruded multilayer barrier structures

However, the barrier part 200 may be extruded or coextruded directly onto the first metal layer 310. In such a case, the material selections may be somewhat different.

One particularly suitable material for the barrier layer 210 is polyamide. Thus, in an embodiment, the barrier layer 210 comprises polyamide. Referring to Figs. 2c and 2e when the barrier layer comprises polyamide, e.g. the barrier layer 210 consists of polyamide (Fig. 2c) or comprises a sub-layer 210a consisting of polyamide (Fig. 2e), the first adhesion layer 222, which joins the polyamide of the barrier layer 210 to the support part 300, comprises at least one of a terpolymer, an ionomer, and ethylene acrylic acid (EAA). The specific mass of the first adhesion layer 222 may be from 1 g/m² to 10 g/m², preferably from 2 g/m² to 5 g/m². In this case, the selection of at least one of a terpolymer, an ionomer, and ethylene acrylic acid (EAA) as the material of the first adhesion layer 222 ensures that [a] the the first adhesion layer 222 can be extruded onto the first metal layer 310 in such a way that the first adhesion layer 222 adheres onto the first metal layer 310, and [b] the the barrier layer 210 can be extruded onto the first adhesion layer 222 in such a way that barrier layer 210 adheres onto the first adhesion layer 222.

Referring to Fig. 2c, the barrier part 200 further comprises the second adhesion layer 224, which joins the barrier layer 210 to a core 910 of a panel 900. The second adhesion layer 224 comprises at least one of low density polyethylene (LDPE), high density polyethylene (HDPE), linear low density polyethylene (LLDPE), metallocene polyethylene, a blend of polyethylene and a terpolymer, a blend of polyethylene and a copolymer, and polypropylene (PP). Preferably, the second adhesion layer 224 has a specific mass of at least 5 g/m², such as from 5 g/m² to 50 g/m², preferably from 10 g/m² to 30 g/m².

Referring to Fig. 2c, when the barrier layer 210 consists of polyamide, also the third adhesion layer 226, which joins the polyamide of the barrier layer 210 to the second adhesion layer 224, comprises at least one of a terpolymer, an ionomer, and ethylene acrylic acid (EAA). The specific mass of the third adhesion layer 226 may be from 1 g/m² to 10 g/m², preferably from 2 g/m² to 5 g/m².

When the barrier layer 210 comprises polyamide, the polyamide of the barrier layer 210 is preferably selected from the group consisting of polyamide-6, polyamide-12, and polyamide-66. When the barrier layer 210 consists of polyamide, the specific mass of the barrier layer 210 is preferably from 5 g/m² to 30 g/m², preferably from 8 g/m² to 20 g/m².

Other suitable materials for the barrier layer 210 include ethylene vinyl alcohol (EVOH), poly vinyl alcohol (PVA), and polybutylene terephthalate (PBT). Thus, in an embodiment, the barrier layer comprises at least one of EVOH, PVA, and PBT. Referring to Figs. 2c and 2e when the barrier layer comprises at least one of EVOH, PVA, and PBT, e.g. the barrier layer 210 consists of only one of EVOH, PVA, and PBT (Fig. 2c) or the barrier layer 210 comprises a sub-layer 210a consisting only one of EVOH, PVA, and PBT, the first adhesion layer 222, which joins the EVOH, PVA, or PBT of the barrier layer 210 to the support part 300, comprises a terpolymer. The specific mass of the first adhesion layer 222 may be from 1 g/m² to 10 g/m², preferably from 2 g/m² to 5 g/m². In this case, the selection of a terpolymer as the material of the first adhesion layer 222 ensures that [a] the the first adhesion layer 222 can be extruded onto the first metal layer 310 in such a way that the first adhesion layer 222 adheres onto the first metal layer 310, and [b] the the barrier layer 210 can be extruded onto the first adhesion layer 222 in such a way that barrier layer 210 adheres onto the first adhesion layer 222.

Referring to Fig. 2c, when the barrier layer 210 consists of only one of EVOH, PVA, and PBT, also the third adhesion layer 226, which joins the EVOH, PVA, or PBT of the barrier layer 210 to a second adhesion layer 224, comprises a terpolymer. The specific mass of the third adhesion layer 226 may be from 1 g/m² to 10 g/m², preferably from 2 g/m² to 5 g/m².

When the barrier layer 210 comprises or consists of PVA, the PVA of the barrier layer 210 is preferably amorphous PVA. When the barrier layer 210 consists of PVA, the specific mass of the barrier layer 210 may be from 3 g/m² to 30 g/m², preferably from 5 g/m² to 15 g/m².

When the barrier layer 210 consists of EVOH, the specific mass of the barrier layer 210 is preferably from 3 g/m² to 30 g/m², preferably from 5 g/m² to 15 g/m².

When the barrier layer 210 consists of PBT, the specific mass of the barrier layer 210 is preferably from 5 g/m² to 30 g/m², preferably from 8 g/m² to 20 g/m².

## Claims

1. A covering (100, 100a, 100b) suitable for use as a covering of a polyurethane panel (900), the covering (100, 100a, 100b) comprising
- a support part (300) comprising
• a first metal layer (310) and
• a support layer (320) comprising fibrous material, the support layer (320) being attached to the first metal layer (310) with an attachment layer (330),
- a barrier part (200)
• comprising a barrier layer (210) comprising at least one of: ethylene vinyl alcohol (EVOH), polyamide, poly vinyl alcohol (PVA), and polybutylene terephthalate (PBT), wherein
• the barrier layer (210) has a specific mass of at least 2 g/m², wherein
- the first metal layer (310) is left in between the support layer (320) and the barrier part (200).

2. The covering of claim 1, wherein
- the first metal layer (310) is made of aluminium and has a thickness (t₃₁₀) of at least 6 µm, such as from 6 µm to 50 µm, preferably from 6 µm to 12 µm.

3. The covering of claim 1 or 2, wherein
- the support layer (320) is made of paper having a specific mass of from 30 g/m² to 200 g/m², preferably from 40 g/m² to 150 g/m²;
preferably,
- the support layer (320) is made of Kraft paper having a specific mass of from 30 g/m² to 200 g/m².

4. The covering of any of the claims 1 to 3, wherein the barrier part (200) comprises
- a first adhesion layer (222), which is left in between the barrier layer (210) and the first metal layer (310), and
- a second adhesion layer (224) such that the barrier layer (210) is left in between the first adhesion layer (222) and the second adhesion layer (224), wherein
- the first adhesion layer (222) comprises at least one of polyethylene, a terpolymer, an ionomer, and ethylene acrylic acid (EAA) and
- the second adhesion layer (224) comprises at least one of polyethylene, low density polyethylene (LDPE), high density polyethylene (HDPE), linear low density polyethylene (LLDPE), metallocene polyethylene, a blend of polyethylene and a terpolymer, a blend of polyethylene and a copolymer, and polypropylene (PP).

5. The covering of claim 4, wherein
- the first adhesion layer (222) has a specific mass of at least 1 g/m² and
- the second adhesion layer (224) has a specific mass of at least 5 g/m².

6. The covering of claim 4 or 5, comprising
- a third adhesion layer (226) in between the barrier layer (210) and the second adhesion layer (224), wherein
- third adhesion layer (226) comprises at least one of: a terpolymer, an ionomer, and ethylene acrylic acid (EAA).

7. The covering of claim 6, wherein
- the third adhesion layer (226) has a specific mass of at least 1 g/m².

8. The covering of any of the claims 4 to 7, wherein
- the first adhesion layer (222) comprises polyethylene and
- the second adhesion layer (224) comprises polyethylene;
preferably,
- the barrier layer (210) comprises polyamide.

9. The covering of any of the claims 1 to 8, wherein the attachment layer (330) comprises
- polymer having a specific mass of at least 8 g/m² and/or
- adhesive having a specific mass of at least 1 g/m².

10. The covering of any of the claims 1 to 9, comprising
- a face part (400) configured protect the support layer (320) from at least humidity, wherein
- the support layer (320) is left in between the face part (400) and the barrier part (200).

11. The covering of claim 10, wherein the face part (400) comprises
- a layer (410, 420) made of metal or polymer, the layer (410, 420) having a specific mass of at least 8 g/m²;
for example, the face part (400) comprises
- a layer (410) of a polymer, the layer (410) having a specific mass of at least 8 g/m² and/or
- a second metal layer (420) made of aluminium, second metal layer (420) having a thickness of at least 6 µm.

12. The covering of the claim 10 or 11, wherein the face part (400) further comprises
- a lacquer layer (440) and/or printing (450) forming at least a part of a second surface (104) of the covering (100).

13. The covering of any of the claims 1 to 12, wherein the barrier part (200) comprises
- a first adhesion layer (222), which is left in between the barrier layer (210) and the first metal layer (310),
- a second adhesion layer (224) such that the barrier layer (210) is left in between the first adhesion layer (222) and the second adhesion layer (224), and
- a third adhesion layer (226) in between the barrier layer (210) and the second adhesion layer (224),
wherein
- the first adhesion layer (222) comprises at least one of a terpolymer, an ionomer, and ethylene acrylic acid (EAA),
- the third adhesion layer (226) comprises at least one of a terpolymer, an ionomer, and ethylene acrylic acid (EAA),
- the second adhesion layer (224) comprises at least one of: low density polyethylene (LDPE), high density polyethylene (HDPE), linear low density polyethylene (LLDPE), metallocene polyethylene, a blend of polyethylene and a terpolymer, a blend of polyethylene and a copolymer, and polypropylene (PP), and
- the barrier layer (210) comprises polyamide.

14. The covering of any of the claims 1 to 12, wherein the barrier part (200) comprises
- a first adhesion layer (222), which is left in between the barrier layer (210) and the first metal layer (310),
- a second adhesion layer (224) such that the barrier layer (210) is left in between the first adhesion layer (222) and the second adhesion layer (224), and
- a third adhesion layer (226) in between the barrier layer (210) and the second adhesion layer (224),
wherein
- the first adhesion layer (222) comprises a terpolymer,
- the third adhesion layer (226) comprises a terpolymer,
- the second adhesion layer (224) comprises at least one of: low density polyethylene (LDPE), high density polyethylene (HDPE), linear low density polyethylene (LLDPE), metallocene polyethylene, a blend of polyethylene and a terpolymer, a blend of polyethylene and a copolymer, and polypropylene (PP) and
- the barrier layer (210) comprises at least one of ethylene vinyl alcohol (EVOH), poly vinyl alcohol (PVA), and polybutylene terephthalate (PBT).

15. A panel (900) comprising
- a core (910) comprising polyurethane and
- a first covering (100, 100a) of any of the claims 1 to 14, wherein
- the barrier part (200) of the first covering (100, 100a) is left in between the core (910) and the support part (300) of the first covering (100, 100a); preferably the panel (900) further comprises
- a second covering (100b) of any of the claims 1 to 14, wherein
- the core (910) is left in between the first covering (100, 100a) and the second covering (100b) such that
- the barrier part (200) of the second covering (100b) is left in between the core (910) and the support part (300) of the second covering (100b).

## Patentansprüche

1. Abdeckung (100, 100a, 100b), die zur Verwendung als Abdeckung einer Polyurethanplatte (900) geeignet ist, wobei die Abdeckung (100, 100a, 100b) umfasst:
- einen Trägerteil (300), der umfasst:
• eine erste Metallschicht (310) und
• eine Trägerschicht (320), die fasriges Material umfasst, wobei die Trägerschicht (320) mit einer Befestigungsschicht (330) an der ersten Metallschicht (310) befestigt ist,
- einen Sperrteil (200),
• umfassend eine Sperrschicht (210), die mindestens eines umfasst von: Ethylenvinylalkohol (EVOH), Polyamid, Polyvinylalkohol (PVA) und Polybutylenterephthalat (PBT), wobei
• die Sperrschicht (210) eine spezifische Masse von mindestens 2 g/m² aufweist, wobei
- die erste Metallschicht (310) zwischen der Trägerschicht (320) und dem Sperrteil (200) gelassen ist.

2. Abdeckung nach Anspruch 1, wobei
- die erste Metallschicht (310) aus Aluminium hergestellt ist und eine Dicke (t₃₁₀) von mindestens 6 µm, beispielsweise 6 µm bis 50 µm, vorzugsweise 6 µm bis 12 µm aufweist.

3. Abdeckung nach Anspruch 1 oder 2, wobei
- die Trägerschicht (320) aus Papier mit einer spezifischen Masse von 30 g/m² bis 200 g/m², vorzugsweise 40 g/m² bis 150 g/m² hergestellt ist;
vorzugsweise
- die Trägerschicht (320) aus Kraftpapier mit einer spezifischen Masse von 30 g/m² bis 200 g/m² hergestellt ist.

4. Abdeckung nach einem der Ansprüche 1 bis 3, wobei der Sperrteil (200) umfasst:
- eine erste Haftschicht (222), die zwischen der Sperrschicht (210) und der ersten Metallschicht (310) gelassen ist, und
- eine zweite Haftschicht (224), derart dass die Sperrschicht (210) zwischen der ersten Haftschicht (222) und der zweiten Haftschicht (224) gelassen ist,
wobei
- die erste Haftschicht (222) mindestens eines von Polyethylen, einem Terpolymer, einem lonomer und Ethylenacrylsäure (EAA) umfasst, und
- die zweite Haftschicht (224) mindestens eines von Polyethylen, Polyethylen niedriger Dichte (LDPE), Polyethylen hoher Dichte (HDPE), linearem Polyethylen niedriger Dichte (LLDPE), Metallocen-Polyethylen, einer Mischung von Polyethylen und einem Terpolymer, einer Mischung von Polyethylen und einem Copolymer und Polypropylen (PP) umfasst.

5. Abdeckung nach Anspruch 4, wobei
- die erste Haftschicht (222) eine spezifische Masse von mindestens 1 g/m² aufweist, und
- die zweite Haftschicht (224) eine spezifische Masse von mindestens 5 g/m² aufweist.

6. Abdeckung nach Anspruch 4 oder 5, umfassend:
- eine dritte Haftschicht (226) zwischen der Sperrschicht (210) und der zweiten Haftschicht (224), und
- wobei die erste Haftschicht (226) mindestens eines umfasst von: einem Terpolymer, einem lonomer und Ethylenacrylsäure (EAA).

7. Abdeckung nach Anspruch 6, wobei
- die dritte Haftschicht (226) eine spezifische Masse von mindestens 1 g/m² aufweist.

8. Abdeckung nach einem der Ansprüche 4 bis 7, wobei
- die erste Haftschicht (222) Polyethylen umfasst, und
- die zweite Haftschicht (224) Polyethylen umfasst,
vorzugsweise
- die Sperrschicht (210) Polyamid umfasst.

9. Abdeckung nach einem der Ansprüche 1 bis 8, wobei die Befestigungsschicht (330) umfasst:
- Polymer mit einer spezifischen Masse von mindestens 8 g/m² und/oder
- Haftmittel mit einer spezifischen Masse von mindestens 1 g/m².

10. Abdeckung nach einem der Ansprüche 1 bis 9, umfassend:
- einen Flächenteil (400), der ausgelegt ist, um die Trägerschicht (320) zumindest vor Feuchtigkeit zu schützen, wobei
- wobei die Trägerschicht (320) zwischen dem Flächenteil (400) und dem Sperrteil (200) gelassen ist.

11. Abdeckung nach Anspruch 10, wobei der Flächenteil (400) umfasst:
- eine Schicht (410, 420), die aus Metall oder Polymer hergestellt ist, wobei die Schicht (410, 420) eine spezifische Masse von mindestens 8 g/m² aufweist;
wobei der Flächenteil (400) zum Beispiel umfasst:
- eine Schicht (410) aus einem Polymer, wobei die Schicht (410) eine spezifische Masse von mindestens 8 g/m² aufweist, und/oder
- eine zweite Metallschicht (420), die aus Aluminium hergestellt ist, wobei die zweite Metallschicht (420) eine Dicke von mindestens 6 µm aufweist.

12. Abdeckung nach Anspruch 10 oder 11, wobei der Flächenteil (400) ferner umfasst:
- eine Lackschicht (440) und/oder einen Aufdruck (450), die/der mindestens einen Teil einer zweiten Oberfläche (104) der Abdeckung (100) bildet.

13. Abdeckung nach einem der Ansprüche 1 bis 12, wobei der Sperrteil (200) umfasst:
- eine erste Haftschicht (222), die zwischen der Sperrschicht (210) und der ersten Metallschicht (310) gelassen ist,
- eine zweite Haftschicht (224), derart dass die Sperrschicht (210) zwischen der ersten Haftschicht (222) und der zweiten Haftschicht (224) gelassen ist, und
- eine dritte Haftschicht (226) zwischen der Sperrschicht (210) und der zweiten Haftschicht (224),
wobei
- die erste Haftschicht (222) mindestens eines von einem Terpolymer, einem lonomer und Ethylenacrylsäure (EAA) umfasst, und
- die dritte Haftschicht (226) mindestens eines von einem Terpolymer, einem lonomer und Ethylenacrylsäure (EAA) umfasst,
- die zweite Haftschicht (224) mindestens eines von umfasst: Polyethylen niedriger Dichte (LDPE), Polyethylen hoher Dichte (HDPE), linearem Polyethylen niedriger Dichte (LLDPE), Metallocen-Polyethylen, einer Mischung von Polyethylen und einem Terpolymer, einer Mischung von Polyethylen und einem Copolymer und Polypropylen (PP), und
- die Sperrschicht (210) Polyamid umfasst.

14. Abdeckung nach einem der Ansprüche 1 bis 12, wobei der Sperrteil (200) umfasst:
- eine erste Haftschicht (222), die zwischen der Sperrschicht (210) und der ersten Metallschicht (310) gelassen ist,
- eine zweite Haftschicht (224), derart dass die Sperrschicht (210) zwischen der ersten Haftschicht (222) und der zweiten Haftschicht (224) gelassen ist, und
- eine dritte Haftschicht (226) zwischen der Sperrschicht (210) und der zweiten Haftschicht (224),
wobei,
- die erste Haftschicht (222) ein Terpolymer umfasst,
- die dritte Haftschicht (226) ein Terpolymer umfasst,
- die zweite Haftschicht (224) mindestens eines von umfasst: Polyethylen niedriger Dichte (LDPE), Polyethylen hoher Dichte (HDPE), linearem Polyethylen niedriger Dichte (LLDPE), Metallocen-Polyethylen, einer Mischung von Polyethylen und einem Terpolymer, einer Mischung von Polyethylen und einem Copolymer und Polypropylen (PP), und
- die Sperrschicht (210) mindestens eines von Ethylenvinylalkohol (EVOH), Polyvinylalkohol (PVA) und Polybutylenterephthalat (PBT) umfasst.

15. Platte (900), umfassend:
- einen Kern (910), der Polyurethan umfasst, und
- eine erste Abdeckung (100, 100a) nach einem der Ansprüche 1 bis 14, wobei
- der Sperrteil (200) der ersten Abdeckung (100, 100a) zwischen dem Kern (910) und dem Trägerteil (300) der ersten Abdeckung (100, 100a) gelassen ist; wobei die Platte (900) ferner umfasst:
- eine zweite Abdeckung (100b) nach einem der Ansprüche 1 bis 14, wobei
- der Kern (910) zwischen der ersten Abdeckung (100, 100a) und der zweiten Abdeckung (100b) gelassen ist, derart dass
- der Sperrteil (200) der zweiten Abdeckung (100b) zwischen dem Kern (910) und dem Trägerteil (300) der zweiten Abdeckung (100b) gelassen ist.

## Revendications

1. Revêtement (100, 100a, 100b) qui est approprié pour son utilisation à titre de revêtement d'un panneau de polyuréthane (900), le revêtement (100, 100a, 100b) comprenant :
- une partie faisant office de support (300) qui comprend :
- une première couche métallique (310) ; et
- une couche de support (320) qui comprend une matière fibreuse, la couche de support (320) étant fixée à la première couche métallique (310) avec une couche de fixation (330) ;
- une partie faisant office de barrière (200)
- qui comprend une couche barrière (210) qui comprend au moins un élément choisi parmi : un copolymère d'éthylène et d'alcool vinylique (EVOH), du polyamide, de l'alcool polyvinylique (PVA) et du polybutylène téréphtalate (PBT) ; dans lequel :
- la couche barrière (210) possède une masse spécifique qui s'élève à au moins 2 g/m² ; dans lequel :
- la première couche métallique (310) est laissée entre la couche de support (320) et la partie faisant office de barrière (200).

2. Revêtement selon la revendication 1, dans lequel :
- la première couche métallique (310) est réalisée en aluminium et possède une épaisseur (t₃₁₀) qui s'élève à au moins 6 µm, comme par exemple de 6 µm à 50 µm, de préférence de 6 µm à 12 µm.

3. Revêtement selon la revendication 1 ou 2, dans lequel :
- la couche de support (320) est réalisée en papier qui possède une masse spécifique s'élevant de 30 g/m² à 200 g/m², de préférence de 40 g/m² à 150 g/m² ; de préférence,
- la couche de support (320) est réalisée en papier kraft qui possède une masse spécifique s'élevant de 30 g/m² à 200 g/m².

4. Revêtement selon l'une quelconque des revendications 1 à 3, dans lequel la partie faisant office de barrière (200) comprend :
- une première couche d'adhésion (222) qui est laissée entre la couche barrière (210) et la première couche métallique (310) ; et
- une deuxième couche d'adhésion (224) de sorte que la couche barrière (210) est laissée entre la première couche d'adhésion (222) et la deuxième couche d'adhésion (224) ;
dans lequel :
- la première couche d'adhésion (222) comprend au moins un élément choisi parmi : du polyéthylène, un terpolymère, un ionomère et un copolymère d'éthylène et d'acide acrylique (EAA) ; et
- la deuxième couche d'adhésion (224) comprend au moins un élément choisi parmi : du polyéthylène, du polyéthylène basse densité (LDPE), du polyéthylène haute densité (HDPE), du polyéthylène linéaire basse densité (LLDPE), du polyéthylène à base de métallocène, une combinaison de polyéthylène et d'un terpolymère, une combinaison de polyéthylène et d'un copolymère, ainsi que du polypropylène (PP).

5. Revêtement selon la revendication 4, dans lequel :
- la première couche d'adhésion (222) possède une masse spécifique qui s'élève à au moins 1 g/m² ; et
- la deuxième couche d'adhésion (224) possède une masse spécifique qui s'élève à au moins 5 g/m².

6. Revêtement selon la revendication 4 ou 5, qui comprend :
- une troisième couche d'adhésion (226) disposée entre la couche barrière (210) et la deuxième couche d'adhésion (224) ; dans lequel :
- la troisième couche d'adhésion (226) comprend au moins un élément choisi parmi : un terpolymère, un ionomère et un copolymère d'éthylène et d'acide acrylique (EAA).

7. Revêtement selon la revendication 6, dans lequel :
- la troisième couche d'adhésion (226) possède une masse spécifique qui s'élève à au moins 1 g/m².

8. Revêtement selon l'une quelconque des revendications 4 à 7, dans lequel :
- la première couche d'adhésion (222) comprend du polyéthylène ; et
- la deuxième couche d'adhésion (224) comprend du polyéthylène ;
de préférence,
- la couche barrière (210) comprend du polyamide.

9. Revêtement selon l'une quelconque des revendications 1 à 8, dans lequel la couche de fixation (330) comprend :
- un polymère dont la masse spécifique s'élève à au moins 8 g/m² ; et/ou
- un adhésif dont la masse spécifique s'élève à au moins 1 g/m².

10. Revêtement selon l'une quelconque des revendications 1 à 9, qui comprend :
- une partie faisant office de parement (400) qui est configurée pour protéger la couche de support (320) contre au moins de l'humidité ; dans lequel :
- la couche de support (320) est laissée entre la partie faisant office de parement (400) et la partie faisant office de barrière (200).

11. Revêtement selon la revendication 10, dans lequel la partie faisant office de parement (400) comprend :
- une couche (410, 420) réalisée en métal ou à partir d'un polymère, la couche (410, 420) possédant une masse spécifique qui s'élève à au moins 8 g/m² ;
par exemple, la partie faisant office de parement (400) comprend :
- une couche (410) réalisée à partir d'un polymère, la couche (410) possédant une masse spécifique qui s'élève à au moins 8 g/m² ; et/ou
- une deuxième couche métallique (420) réalisée en aluminium, ladite deuxième couche métallique (420) possédant une épaisseur qui s'élève à au moins 6 µm.

12. Revêtement selon la revendication 10 ou 11, dans lequel la partie faisant office de parement (400) comprend en outre :
- une couche de laque (440) et/ou une impression (450) qui forme(nt) au moins une partie d'une deuxième surface (104) du revêtement (100).

13. Revêtement selon l'une quelconque des revendications 1 à 12, dans lequel la partie faisant office de barrière (200) comprend :
- une première couche d'adhésion (222) que l'on laisse subsister entre la couche barrière (210) et la première couche métallique (310) ;
- une deuxième couche d'adhésion (224) telle que l'on laisse subsister la couche barrière (210) entre la première couche d'adhésion (222) et la deuxième couche d'adhésion (224) ; et
- une troisième couche d'adhésion (226) entre la couche barrière (210) et la deuxième couche d'adhésion (224) ;
dans lequel :
- la première couche d'adhésion (222) comprend au moins un élément choisi parmi : un terpolymère, un ionomère et un copolymère d'éthylène et d'acide acrylique (EAA) ;
- la troisième couche d'adhésion (226) comprend au moins un élément choisi parmi : un terpolymère, un ionomère et un copolymère d'éthylène et d'acide acrylique (EAA) ;
- la deuxième couche d'adhésion (224) comprend au moins un élément choisi parmi : du polyéthylène basse densité (LDPE), du polyéthylène haute densité (HDPE), du polyéthylène linéaire basse densité (LLDPE), du polyéthylène à base de métallocène, une combinaison de polyéthylène et d'un terpolymère, une combinaison de polyéthylène et d'un copolymère, ainsi que du polypropylène (PP) ; et
- la couche barrière (210) comprend du polyamide.

14. Revêtement selon l'une quelconque des revendications 1 à 12, dans lequel la partie faisant office de barrière (200) comprend :
- une première couche d'adhésion (222) que l'on laisse subsister entre la couche barrière (210) et la première couche métallique (310) ;
- une deuxième couche d'adhésion (224) telle que l'on laisse subsister la couche barrière (210) entre la première couche d'adhésion (222) et la deuxième couche d'adhésion (224) ; et
- une troisième couche d'adhésion (226) entre la couche barrière (210) et la deuxième couche d'adhésion (224) ;
dans lequel :
- la première couche d'adhésion (222) comprend un terpolymère ;
- la troisième couche d'adhésion (226) comprend un terpolymère ;
- la deuxième couche d'adhésion (224) comprend au moins un élément choisi parmi : du polyéthylène basse densité (LDPE), du polyéthylène haute densité (HDPE), du polyéthylène linéaire basse densité (LLDPE), du polyéthylène à base de métallocène, une combinaison de polyéthylène et d'un terpolymère, une combinaison de polyéthylène et d'un copolymère, ainsi que du polypropylène (PP) ; et
- la couche barrière (210) comprend au moins un élément choisi parmi : un copolymère d'éthylène et d'alcool vinylique (EVOH), de l'alcool polyvinylique (PVA) et du polybutylène téréphtalate (PBT).

15. Panneau (900) qui comprend :
- une partie centrale (910) qui comprend du polyuréthane ; et
- un premier revêtement (100, 100a) selon l'une quelconque des revendications 1 à 14, dans lequel :
- la partie faisant office de barrière (200 du premier revêtement (100, 100a) est laissée entre la partie centrale (910) et la partie faisant office de support (300) du premier revêtement (100, 100a) ;
de préférence, le panneau (900) comprend en outre :
- un deuxième revêtement (100b) selon l'une quelconque des revendications 1 à 14 ; dans lequel :
- la partie centrale (910) est laissée entre le premier revêtement (100, 100a) et le deuxième revêtement (100b) d'une manière telle que
- la partie faisant office de barrière (200) du deuxième revêtement (100b) est laissée entre la partie centrale (910) et la partie faisant office de support (300) du deuxième revêtement (100b).
